# EUROPÄISCHE PATENTSCHRIFT

(11) **EP 1 658 447 B1**
(45) Veröffentlichungstag und Bekanntmachung des Hinweises auf die Patenterteilung: **07.03.2007**
(21) Anmeldenummer: 04741867.8
(22) Anmeldetag: 23.06.2004
(51) Int. Cl.: F16F 9/04, B60G 15/14

(54) **PNEUMATISCHE FEDER- UND D MPFEREINHEIT, INSBESONDERE FÜR EIN KRAFTFAHRZEUG**
PNEUMATIC SPRING/DAMPER UNIT, ESPECIALLY FOR A MOTOR VEHICLE
UNITE D'AMORTISSEMENT A RESSORT PNEUMATIQUE, NOTAMMENT POUR UNE AUTOMOBILE

(30) Priorität: 22.08.2003 DE 10338939
(43) Veröffentlichungstag der Anmeldung: 24.05.2006
(73) Patentinhaber: Continental Aktiengesellschaft, 30165 Hannover (DE)
(72) Erfinder: KRAUSS, Hans-Peter, 30453 Hannover (DE)
(74) Vertreter: Finger, Karsten
(86) Internationale Anmeldenummer: PCT/EP2004/051206
(87) Internationale Veröffentlichungsnummer: WO 2005/021994

(56) Entgegenhaltungen:
- WO-A-02/070918
- WO-A-02/079664
- DE-C- 3 824 932

## Beschreibung

Die Erfindung bezieht sich auf eine pneumatische Feder- und Dämpfereinheit nach dem Oberbegriff des Anspruchs 1.
Derartige Feder- und Dämpfereinheiten werden vorzugsweise in der Fahrzeugindustrie eingesetzt.

Pneumatische Feder- und Dämpfereinheiten dieser Art bestehen grundsätzlich aus einem zylindrischen Gehäuse und aus einem doppelt wirkenden. Trennkolben mit einer Kolbenstange, die aus dem zylindrischen Gehäuse herausragt. Das zylindrische Gehäuse einerseits und die herausragende Kolbenstange andererseits sind fest mit dem Fahrzeugaufbau und der Radaufhängung eines Fahrzeuges verbunden. Dabei ist der herausragende Teil der Kolbenstange durch einen Rollbalg abgedeckt, der einerseits am zylindrischen Gehäuse und anderseits am Kopf der Kolbenstange befestigt ist und der einen eingeschlossenen Federraum ausbildet.
Der Trennkolben und die Kolbenstange sind mit Dichtelementen ausgestattet, die den inneren Raum des zylindrischen Gehäuses in einen beim Einfedern kleiner werdenden Dämpferraum und einen beim Einfedern größer werdenden Dämpferraum aufteilen. In der Regel ist der beim Einfedern kleiner werdende Dämpferraum über einen in der Kolbenstange befindlichen Kanal mit dem vom Rollbalg eingeschlossenen Federraum verbunden, sodass sich ein kombinierter Feder-Dämpferraum ausbildet.
Die Feder- und Dämpfereinheit ist über einen Zuleitungsanschluss mit einer Luftversorgungsanlage verbunden, die das Druckniveau der eingeschlossenen Luft auf ein vorbestimmtes Maß konstant hält. Zum Ausgleich der Luftmengen zwischen dem beim Einfedern kleiner werdenden Feder-Dämpferraum und dem beim Einfedern größer werdenden Dämpferraum während einer von außen einwirkenden Kraft befinden sich im Trennkolben entsprechende Überströmdrosseln. Diese Überströmdrosseln sind in beiden Richtungen wirkend ausgelegt, wobei diese Überströmdrosseln in der einen Richtung als Druckstufe mit einem höheren Durchflusswiderstand und in der anderen Richtung als Zugstufe mit einem geringeren Durchflusswiderstand ausgelegt sind.
So zeigt die DE 38 24 932 C1 Überströmdrosseln, die als offene Drosselbohrungen mit einem für jede Durchflussrichtung vorbestimmten Durchflusswiderstand ausgelegt sind. Diese Überströmdrosseln sind also Konstantdrosseln, woraus sich der Nachteil ergibt, dass diese Feder- und Dämpfereinheit nur einen begrenzten Einsatzbereich hat.
Die DE-G 84 13 300.7 beschreibt eine federbelastete Überströmdrossel, bei der ein durch den Trennkolben führender Kanal durch mindestens zwei Federscheiben aus Stahlblech abgedeckt ist. Dabei sind die Federscheiben einerseits des Trennkolbens außen und andererseits des Trennkolbens innen gelagert, sodass sich die Federscheiben in der einen Richtung mit ihrem inneren Durchmesser und in der anderen Richtung mit ihrem äußeren Durchmesser von ihrer Lagerauflage abheben. Damit werden die unterschiedlichen Durchflusswiderstände realisiert. Mit einer entsprechenden Auswahl der Federstärken kann eine besondere Dämpfungscharakteristik erreicht werden, die aber auch wieder nur auf einen besonderen Anwendungsfall zugeschnitten ist. Eine Anpassung an andere Anwendungsfälle erfordert einen Austausch der Federscheiben oder eine Veränderung der Vorspannung der Federscheiben. Die Umrüstung ist sehr aufwendig und zur Verstellung der Vorspannung der Federscheiben sind zusätzliche technische Einrichtungen erforderlich.
In der DE 44 18 120 A1 wird nun eine solche verstellbare Überströmdrossel vorgestellt, bei der die mechanischen Federkräfte der Federscheiben durch magnetische Kräfte unterstützt werden. Diese magnetischen Kräfte werden durch einen im Trennkolben befmdlichen Elektromagneten erzeugt, der durch entsprechende Leitungen von außen versorgt und gesteuert wird. Damit werden die an der Überströmdrossel wirkenden Dämpfungskräfte an den konkreten Belastungsfall angepasst.
Diese federbelasteten und insbesondere die verstellbaren Überströmdrosseln haben zunächst den Nachteil, dass sie sehr störanfällig sind. Das ist darauf zurückzuführen, dass die Überströmdrosseln im Trennkolben untergebracht sind und wenn die Feder- und
Dämpfereinheit in ihrer Einbaulage mit ihrer Kolbenstange an der Radaufhängung des Fahrzeuges befestigt ist, dann ist dieser Trennkolben den hohen Achsbeschleunigungen des Fahrzeuges ausgesetzt. Die so von außen in die Feder- und Dämpfereinheit eingebrachten Schwingungen beeinflussen die Funktion der Federscheiben und verfälschen somit die gewünschte Dämpfungscharakteristik.
Von wesentlichem Nachteil ist aber, dass bei dieser Art einer Feder- und Dämpfereinheit der Trennkolben sehr groß ausgeführt werden muss, weil die Überströmdrosseln mit ihren Verschlusselementen und mit dem Elektromagneten einen relativ großen Platzbedarf haben. Sehr groß muss auch die Kolbenstange ausgeführt werden, da die Versorgungs- und Steuerelemente für die Betätigung der Überströmdrosseln durch das Innere des Trennkolbens nach außen geführt werden müssen. Diese Überdimensionierung von Trennkolben und Kolbenstange und die komplizierte Konstruktion des Trennkolbens und der Kolbenstange machen die Herstellung der Feder- und Dämpfereinheit aufwendig und teuer.
Diese Überdimensionierung von Trennkolben und Kolbenstange führt aber auch dazu, dass die Feder- und Dämpfereinheit solche räumlichen Ausmaße annimmt, die einen Einsatz in einem begrenzten Einbauraum verhindern. Die Überdimensionierung von Trennkolben und Kolbenstange kann aber auch nach innen wirken, wenn die Außenmaße der Feder- und Dämpfereinheit vorgegeben sind. Dann führt die Überdimensionierung zu einer Verkleinerung des Dämpferraumes bzw. des Feder-Dämpferraumes und damit zu einer Leistungsminderung der Feder- und Dämpfereinheit.
Diese Überdimensionierung ist aber auch mit einer Massenerhöhung des Trennkolbens und der Kolbenstange verbunden und das ist immer dann von Nachteil, wenn die bewegten Massen des Trennkolbens und der Kolbenstange durch eine entsprechende Einbaulage der Feder-Dämpfereinheit den Achsbeschleunigungen ausgesetzt sind.
Der Erfindung liegt daher die Aufgabe zu Grunde, das Verhältnis zwischen den Außenmaßen einer gattungsgemäßen Feder- und Dämpfereinheit und der Größe der Feder- und Druckräume der Feder- und Dämpfereinheit zu verbessern.

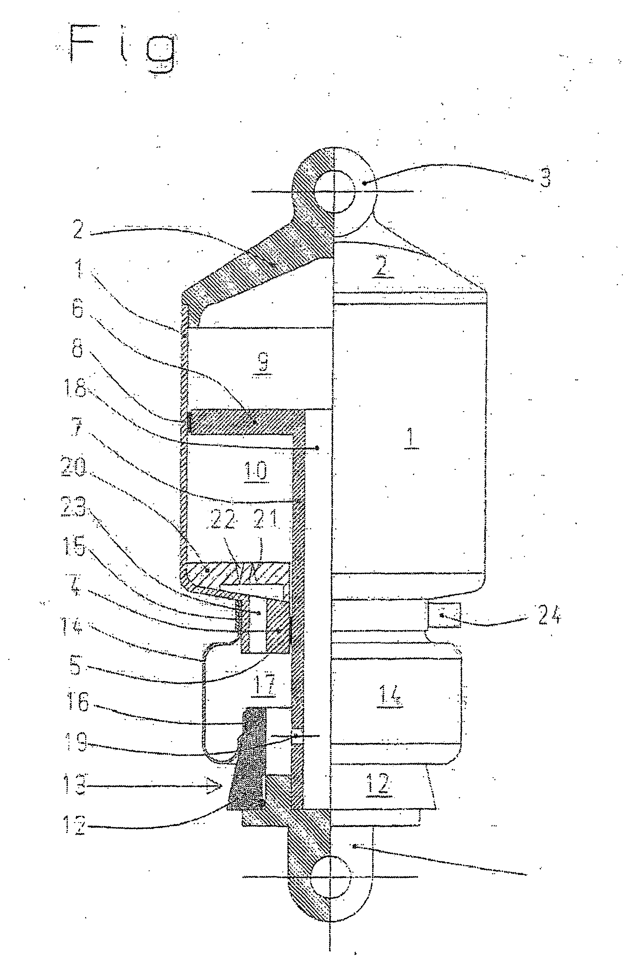

Diese Aufgabe wird durch die kennzeichnenden Merkmale des Anspruches 1 gelöst. Weitere Ausgestaltungsmöglichkeiten ergeben sich aus den Unteransprüchen 2 und 3. Die neue Feder- und Dämpfereinheit verbessert die genannten Nachteile des Standes der Technik.
Dabei ist von besonderem Vorteil, dass die Feder- und Dämpfereinheit klein bauend ist, weil der Trennkolben und die Kolbenstange sehr schlank gehalten werden können. Das spart Einbauraum und/oder vergrößert das Volumen der Feder- und der Dämpferräume. Außerdem verringern sich mit der geringeren Dimensionierung die Massen des Trennkolbens und der Kolbenstange, was sich vorteilhaft auf das Dämpfungsverhalten auswirkt.
Des weiteren ist die Anordnung der Überströmdrosseln im Zylindergehäuse technisch und wirtschaftlich mit einfachen Mitteln zu realisieren, weil die neue Position der Überströmdrosseln von außen besser zugänglich und damit einfacher einzuordnen ist. Die verbesserte Zugänglichkeit wirkt sich aber nicht nur durch eine einfachere Herstellung aus, sondern ermöglicht auch in vorteilhafter Weise eine erforderliche Umrüstung auf eine andere Federkennlinie.
Mit der Anordnung der Überströmdrosseln im Zylindergehäuse werden bei einer normalen Einbaulage der Feder-Dämpfereinheit die von der Achse ausgehende Schwingungen von den Überströmdrosseln fern gehalten, was sich positiv auf das Dämpfungsverhalten auswirkt.
Es ist auch zweckmäßig, wenn zu den Überströmdrosseln weitere Drosselorgane in oder an der Kolbenstange vorgesehen sind, wobei die Verstellung der Drosselquerschnitte in Abhängigkeit vom Weg der Kolbenstange erfolgt. Damit können unter Nutzung der stärkeren Strömungen innerhalb der Kolbenstange zusätzliche Dämpfungskräfte erzeugt werden.
Die Erfindung soll anhand eines Ausführungsbeispieles näher erläutert werden.
Dazu zeigt die einzige Figur eine Feder- und Dämpfereinheit in einem Halbschnitt.

Danach besteht die pneumatische Feder- und Dämpfereinheit in bekannter Weise aus einem Zylindergehäuse 1, das einerseits mit einem Zylinderdeckel 2 druckdicht verschlossen ist. Dieser Zylinderdeckel 2 besitzt ein Befestigungselement 3 zur Anlenkung zum Beispiel an den Aufbau eines Fahrzeuges. Auf der dem Zylinderdeckel 2 gegenüberliegenden Seite ist am Zylindergehäuse 1 ein querschnittsverengender Bund 4 mit einer Durchgangsbohrung angeformt. In der Durchgangsbohrung des Bundes 4 befindet sich ein Gleit- und Dichtelement 5. Im Inneren des Zylindergehäuses 1 ist mit Spiel ein doppeltwirkender Trennkolben 6 mit einer Kolbenstange 7 eingepasst, wobei der Trennkolben 6 an seinem Umfang mit einem Gleit- und Dichtelement 8 ausgerüstet ist und die Kolbenstange 7 den Bund 4 in seiner Durchgangsbohrung durchdringt. Damit bilden sich auf der Kolbenseite des Trennkolbens 6 ein beim Einfedern des Trennkolbens 6 kleiner werdender Dämpferraum 9 und auf der Kolbenstangenseite des Trennkolbens 6 ein beim Einfedern des Trennkolbens 6 größer werdender Dämpferraum 10 aus. An seinem herausragenden Ende besitzt die Kolbenstange 7 ein Befestigungselement 11 zur Anlenkung der Feder-Dämpfereinheit zum Beispiel an die Radaufhängung des Fahrzeuges. Mit dem Befestigungselement 11 und daher mit der Kolbenstange 7 fest verbunden ist ein Abrollkolben 12 mit einer äußeren Abrollfläche 13 für einen Rollbalg 14. Dieser Rollbalg 14 ist einerseits mit einer ersten Befestigungsmanschette 15 am Bund 4 des Zylindergehäuses 1 und andererseits mit einer zweiten Befestigungsmanschette 16 an dem zylindergehäusenahen Ende am Abrollkolben 12 fest und druckdicht befestigt. Damit bildet sich zwischen der Kolbenstange 7 und dem Rollbalg 14 ein beim Einfedern des Trennkolbens 6 kleiner werdender Federraum 17 aus.
Der Dämpferraum 9, der Dämpferraum 10 und der Federraum 17 sind nun in einer besonderen Weise miteinander verbunden. So besitzt die Kolbenstange 7 eine axiale Durchgangsbohrung 18 und im Bereich des Federraumes 17 eine radiale Bohrung 19, die zusammen den beim Einfedern kleiner werdenden Federraum 17 und den beim Einfedern kleiner werdenden Dämpferraum 9 miteinander zu einem gleichwirkenden Feder-und Dämpferraum ausbilden.
Im Bereich seines Bundes 4 besitzt das Zylindergehäuse 1 einen im Zylindergehäuse 1 festsitzenden Ventileinsatz 20, der mit einer aus mehreren Öffnungen bestehenden Überströmdrossel 21 für die Druckstufe und mit einer ebenfalls aus mehreren Öffnungen bestehenden Überströmdrossel 22 für die Zugstufe ausgerüstet ist. Diese beiden Überströmdrosseln 21, 22 verbinden unter Mitwirkung eines im Bund 4 des Zylindergehäuses 1 befindlichen Verbindungskanals 23 den Federraum 17 und damit auch den beim Einfedern kleiner werdenden Dämpferraum 9 mit dem beim Einfedern größer werdenden Dämpferraum 10.
Dabei sind die Überströmdrosseln 21, 22 in herkömmlicher Weise als Drosselbohrungen mit konstantem Querschnitt, als federbelastete Drosselorgane mit einer konstanten oder einer verstellbaren Federkennlinie ausgeführt. Die entsprechenden Einrichtungen zur Versorgung und Steuerung der Drosselorgane der Überströmdrosseln 21, 22 befinden sich außerhalb der Feder- und Dämpfereinheit und sind über einen am Bund 4 des Zylindergehäuses 1 angeordneten und symbolisch dargestellten Adapter 24 mit den Überströmdrosseln 21, 22 verbunden.

Die Wirkungsweise einer solchen Feder- und Dämpfereinheit ist hinreichend bekannt und wird daher nur kurz ausgeführt. Durch die Wirkung einer geschlossenen Luftversorgungsanlage herrscht im Inneren der Feder- und Dämpfereinheit stets ein Luftdruck mit einem ausgewählten Druckniveau. Eine von außen auf die Feder- und Dämpfereinheit wirkende Last hat das Bestreben, den Trennkolben 6 in das Zylindergehäuse 1 einzuschieben. Dieser Bewegung wirkt eine Kraft entgegen, die sich aus dem im Inneren der Feder- und Dämpfereinheit herrschenden Luftdruck und der Differenz der beiden Flächen am Trennkolben 6 ergibt. Diese entgegenwirkende Kraft hält den Trennkolben 6 in seiner Position und damit die Radaufhängung und den Fahrzeugaufbau auf den gewünschten Abstand. Dabei ergibt sich die gewünschte Federwirkung durch die Kompressibilität der eingeschlossenen Luft. Im Rahmen dieser Kompressibilität vollzieht der Trennkolben 6 schwingende Bewegungen, bei denen eine Verdrängung der eingeschlossenen Luft von der jeweils kleiner werdenden Dämpfungskammer über die Überströmdrosseln 21, 22 in die größer werdende Dämpfungskammer stattfindet. Dabei entstehen an den Überströmdrosseln 21, 22 Dämpfungskräfte, die der federnden Bewegung des Trennkolbens 6 entgegenwirken.

### Liste der Bezugszeichen

- 1: Zylindergehäuse
- 2: Zylinderdeckel
- 3: Befestigungselement des Zylindergehäuses
- 4: Bund
- 5: Gleit- und Dichtelement des Zylindergehäuses
- 6: Trennkolben
- 7: Kolbenstange
- 8: Gleit- und Dichtelement des Trennkolbens
- 9: beim Einfedern kleiner werdender Dämpferraum
- 10: beim Einfedern größer werdender Dämpferraum
- 11: Befestigungselement der Kolbenstange
- 12: Abrollkolben
- 13: Abrollfläche
- 14: Rollbalg
- 15: erste Befestigungsmanschette
- 16: zweite Befestigungsmanschette
- 17: beim Einfedern kleiner werdender Federraum
- 18: axiale Durchgangsbohrung
- 19: radiale Bohrung
- 20: Ventileinsatz
- 21: Überströmdrossel für die Druckstufe
- 22: Überströmdrossel für die Zugstufe
- 23: Verbindungskanal
- 24: Adapter

## Patentansprüche

1. Pneumatische Feder- und Dämpfereinheit, insbesondere für ein Kraftfahrzeug, bestehend aus einem Zylindergehäuse (1) und einem im Zylindergehäuse (1) eingepassten und doppelt wirkenden Trennkolben (6) mit einer aus dem Zylindergehäuse (1) herausragenden Kolbenstange (7), wobei das Zylindergehäuse (1) einerseits und die Kolbenstange (7) andererseits an zwei bewegliche Bauteile angeschlagen sind und der Trennkolben (6) den Innenraum des Zylindergehäuses (1) in einen beim Einfedern kleiner werden Dämpferraum (9) und einen weiteren, beim Einfedern größer werdenden Dämpferraum (10) aufteilt und zwischen der herausragenden Kolbenstange (7) und dem Zylindergehäuse (1) ein Rollbalg (14) befestigt ist, der einen beim Einfedern kleiner werdenden Federraum (17) ausbildet, wobei der Federraum (17) und der Dämpferraum (9) über Kanäle in der Kolbenstange (7) zu einem gemeinsamen Feder-Dämpferraum (9, 17) zusammengeführt und der gemeinsame Feder-Dämpferraum (9, 17) und der Dämpferraum (10) über Überströmdrosseln (21, 22) verbunden sind,
**dadurch gekennzeichnet, dass** die Überströmdrosseln (21, 22) im Zylindergehäuse (1) zwischen dem beim Einfedern größer werdenden Dämpferraum (10) und dem beim Einfedern kleiner werdenden Federraum (17) angeordnet sind.

2. Pneumatische Feder- und Dämpfereinheit nach Anspruch 1,
**dadurch gekennzeichnet, dass** das Zylindergehäuse (1) im Bereich zwischen dem Dämpferraum (10) und dem Federraum (17) einen offenen Verbindungskanal (23) besitzt und die Überströmdrosseln (21, 22) in einem im Zylindergehäuse (1) festliegenden Ventileinsatz (20) angeordnet sind.

3. Pneumatische Feder- und Dämpfereinheit nach Anspruch 1, wobei die Überströmdrosseln (21, 22) als federbelastete Drosseln mit einer konstanten oder einer verstellbaren Federkennlinie ausgeführt sind,
**dadurch gekennzeichnet, dass** die entsprechenden Einrichtungen zur Versorgung und Steuerung der Drosselorgane der Überströmdrosseln (21, 22) sich außerhalb der Feder-Dämpfereinheit befinden und über einen am Bund (4) des Zylindergehäuses (1) angeordneten Adapter (24) mit den Überströmdrosseln (21, 22) verbunden sind.

4. Pneumatische Feder- und Dämpfereinheit nach Anspruch 3,
**dadurch gekennzeichnet, dass** zu den Überströmdrosseln (21, 22) weitere Drosselorgane in oder an der Kolbenstange (7) vorgesehen sind, wobei die Verstellung der Drosselquerschnitte in Abhängigkeit vom Weg der Kolbenstange (7) erfolgt.

## Claims

1. Pneumatic spring/damper unit, in particular for a motor vehicle, comprising a cylinder housing (1) and a double-acting separator piston (6) which is fitted into the cylinder housing (1) and has a piston rod (7) which projects out of the cylinder housing (1), the cylinder housing (1) and the piston rod (7) each being attached to a respective one of two moveable components and the separator piston (6) dividing the interior of the cylinder housing (1) into one damper space (9) which decreases in size during compression and one further damper space (10) which increases in size during compression and a rolling bellows (14) being fastened in between the projecting piston rod (7) and the cylinder housing (1), said rolling bellows (14) forming a spring space (17) which decreases in size during compression, the spring space (17) and the damper space (9) being combined by means of ducts in the piston rod (7) into a common spring/damper space (9, 17), and the common spring/damper space (9, 17) and the damper space (10) being connected by means of overflow throttles (21, 22),
**characterized in that** the overflow throttles (21, 22) are arranged in the cylinder housing (1) between the damper space (10) which increases in size during compression and the spring space (17) which decreases in size during compression.

2. Pneumatic spring/damper unit according to Claim 1,
**characterized in that** the cylinder housing (1) has an open connecting duct (23) in the region between the damper space (10) and the spring space (17), and the overflow throttles (21, 22) are arranged in a valve insert (20) which is fixedly located in the cylinder housing (1).

3. Pneumatic spring/damper unit according to Claim 1, the overflow throttles (21, 22) being embodied as spring-loaded throttles having a constant or adjustable spring characteristic,
**characterized in that** the corresponding devices for powering and controlling the throttle elements of the overflow throttles (21, 22) are situated outside the spring/damper unit and are connected to the overflow throttles (21, 22) by means of an adapter (24) which is arranged on the collar (4) of the cylinder housing (1).

4. Pneumatic spring/damper unit according to Claim 3,
**characterized in that**, in addition to the overflow throttles (21, 22), further throttle elements are provided in or on the piston rod (7), the throttle cross sections being adjusted as a function of the stroke of the piston rod (7).

## Revendications

1. Unité d'amortissement à ressort pneumatique, notamment pour un véhicule automobile, constituée d'un boîtier de cylindre (1) et d'un piston de séparation (6) à effet double et adapté dans le boîtier de cylindre (1), avec une tige de piston (7) saillant hors du boîtier de cylindre (1), le boîtier de cylindre (1) d'une part et la tige de piston (7) d'autre part étant frappés au niveau de deux composants mobiles et le piston de séparation (6) divisant l'espace interne du boîtier de cylindre (1) en un espace d'amortissement (9) se rétrécissant lors de la compression du ressort et un autre espace d'amortissement (10) s'agrandissant lors de la compression du ressort, et un soufflet roulant (14) étant fixé entre la tige de piston saillante (7) et le boîtier de cylindre (1), lequel forme un espace de ressort (17) se rétrécissant lors de la compression du ressort, l'espace de ressort (17) et l'espace-d'amortissement (9) étant réunis par le biais de canaux dans la tige de piston (7) pour former un espace d'amortissement à ressort commun (9, 17) et l'espace d'amortissement à ressort commun (9, 17) et l'espace d'amortissement (10) étant connectés par le biais d'étranglements de débordement (21, 22),
**caractérisée en ce que** les étranglements de débordement (21, 22) sont disposés dans le boîtier de cylindre (1) entre l'espace d'amortissement (10) s'agrandissant lors de la compression du ressort et l'espace de ressort (17) se rétrécissant lors de la compression du ressort.

2. Unité d'amortissement à ressort pneumatique selon la revendication 1, **caractérisée en ce que** le boîtier de cylindre (1) possède dans la région entre l'espace d'amortissement (10) et l'espace de ressort (17) un canal de connexion ouvert (23) et les étranglements de débordement (21, 22) sont disposés dans un élément de soupape (20) fixé dans le boîtier de cylindre (1).

3. Unité d'amortissement à ressort pneumatique selon la revendication 1, dans laquelle les étranglements de débordement (21, 22) sont réalisés sous forme d'étranglements sollicités par ressort avec une caractéristique de ressort constante ou réglable, **caractérisée en ce que** les dispositifs correspondants pour l'alimentation et la commande des organes d'étranglement des étranglements de débordement (21, 22) sont situés en dehors de l'unité d'amortissement à ressort et sont connectés aux étranglements de débordement (21, 22) par le biais d'un adaptateur (24) disposé sur l'épaulement (4) du boîtier de cylindre (1).

4. Unité d'amortissement à ressort pneumatique selon la revendication 3, **caractérisée en ce que** l'on prévoit en plus des étranglements de débordement (21, 22) d'autres organes d'étranglement dans ou sur la tige de piston (7), le réglage des sections transversales s'effectuant en fonction de la course de la tige de piston (7).
